# EUROPÄISCHE PATENTSCHRIFT

(11) **EP 0 641 965 B1**
(45) Veröffentlichungstag und Bekanntmachung des Hinweises auf die Patenterteilung: **04.03.1998**
(21) Anmeldenummer: 94113859.6
(22) Anmeldetag: 05.09.1994
(51) Int. Cl.: F16L 11/08, F16L 51/02

(54) **Schlauchförmiger Hohlkörper, insbesondere Dampfschlauch, Kompensator und Luftfeder**
Hollow, tubular element, especially a steam resistant hose, a compensator, and an air spring
Elément creux tubulaire, en particulier tuyau souple résistant à la vapeur, compensateur et ressort pneumatique

(30) Priorität: 07.09.1993 DE 4330164; 07.09.1993 DE 4330165
(43) Veröffentlichungstag der Anmeldung: 08.03.1995
(73) Patentinhaber: PHOENIX AKTIENGESELLSCHAFT, 21079 Hamburg (DE)
(72) Erfinder: Hellmig, Winfried, Textilingenieur, DE-21612 Buxtehude (DE); Friederich, Hans-Werner, Dipl.Ing., D-21423 Winsen (DE); Wessely, Gerhard, Dipl. Ing., DE-22587 Hamburg (DE)

(56) Entgegenhaltungen:
- EP-A- 0 534 588
- FR-A- 2 313 622
- US-A- 3 578 028
- US-A- 4 212 327
- PATENT ABSTRACTS OF JAPAN vol. 15, no. 171 (M-1108) 30. April 1991 & JP-A-03 036 025 (YOKOHAMA RUBBER CO. LTD) 15. Februar 1991
- PATENT ABSTRACTS OF JAPAN vol. 18, no. 206 (M-1591) 12. April 1994 & JP-A-06 008 376 (BRIDGESTONE CORP.)

## Beschreibung

Die Erfindung betrifft einen schlauchförmigen Hohlkörper, bestehend aus einer Innen- und Außenschicht aus elastomerem Werkstoff und einem eingebetteten ein- oder mehrlagigen Festigkeitsträger sowie gegebenenfalls aus einer oder mehreren zusätzlichen Zwischenschicht/en besteht. Der elastomere Werkstoff ist dabei Gummi oder gummiähnlicher Kunststoff. Derartige Hohlkörper sind beispielsweise aus der FR-A-2 313 622 bekannt.

Für Dampfschläuche als ein besonderer Anwendungsbereich werden unterschiedliche Festigkeitsträger, wie beispielsweise Stahl oder im textilen Bereich Polyamid, Reyon, herkömmliches Para-Armid und Glas eingesetzt. Alle diese Materialien zeigen nach mehr oder weniger langer Dampfeinwirkung zum Teil erhebliche Festigkeitsverluste, bei Stahl beispielsweise durch Korrosion. Auch bei anderen Schläuchen, die heiße Medien (z.B. Öl) fördern, treten ähnliche Probleme auf.

Bei den genannten Materialien müssen die Schläuche festigkeitsmäßig sehr stark überdimensioniert sein, d.h. wesentlich über die in der Norm geforderte 10-fache Sicherheit hinaus, um eine angemessene Standzeit der Schläuche zu erreichen.

Unter den gattungsgemäßen Hohlkörpern für hohe Temperaturen und hohe Feuchten versteht man ferner Luftfedern und Kompensatoren für Kühlwasserleitungen, Heizungsanlagen, Heißwasser-Versorgungsanlagen usw., die über längere Betriebszeiträume einer hohen Temperatur verbunden mit hoher Feuchtigkeit unterliegen. Auch Kompensatoren in Dampferzeugern und Dampfleitungen sowie Kompensatoren, bei denen beispielsweise heiße Öle oder Frostschutzmittel mit höheren Temperaturen im Spiel sind, werden hiervon erfaßt.

Es werden auch hier unterschiedliche Festigkeitsträger, wie beispielsweise Stahl oder im textilen Bereich Polyamid, Para-Aramid und PEEK eingesetzt. Die meisten Materialien zeigen nach längeren Zeiträumen der Einwirkung von hohen Temperaturen und hoher Feuchtigkeit (Dampf, heiße Öle etc.) ebenfalls zum Teil einen erheblichen Festigkeitsverlust, bei Stahl beispielsweise durch Korrosion. Einige Festigkeitsträger haben aufgrund ihres chemischen Aufbaus auch kein ausreichendes Haftvermögen zu Gummi bzw. verlieren die Haftung beispielsweise durch die eingesetzte Korrosion.

Bei einigen der genannten Festigkeitsträger müssen die Kompensatoren zum Teil erheblich überdimensioniert werden, um überhaupt eine angemessene Standzeit zu erreichen.

Die Lösung des oben genannten Problemkreises bei schlauchförmigen Hohlkörpern, die hohen Feuchten und hohen Temperaturen ausgesetzt sind, besteht erfindungsgemäß nun darin, daß der Festigkeitsträger aus Aramid
- hydrolysebeständig ist,
- als Einfachgarn, Zwirn oder Kord mit höherer Drehung ausgebildet ist, wobei der α-Wert 45 bis 100, insbesondere 55 bis 90, beträgt; sowie
- einen Einlagenwinkel von 54,7 bis 90 Grad, insbesondere 60 Grad, bei Betriebsdruck aufweist.

Vergleichsversuche im offenen Dampf haben gezeigt, daß das erfindungsgemäß eingesetzte Aramid selbst nach längerer Einwirkzeit nur einen sehr geringen Festigkeitsverlust hat, wobei auf das beiliegende Diagramm verwiesen wird. Bei der Verwendung hochmoduliger Festigkeitsträger hat die Praxis gezeigt, daß bei unsachgemäßer Biegebeanspruchung (z.B. Knicken bei Dampfschläuchen) der Festigkeitsträger Schaden nehmen kann. Dies ist darauf zurückzuführen, daß der Festigkeitsträger in der Streckzone überdehnt wird. Um die überdehnung des Fadens zu vermeiden, wird der Festigkeitsträger so eingearbeitet, daß er bei Betriebsdruck zwischen 54,7 und 90 Grad liegt. Versuche haben gezeigt, daß bei einem Winkel von 60 Grad ein optimaler Zustand erreicht wird, und zwar in Verbindung mit dem oben genannten α-Wert.

In Verbindung mit der Verwendung des Hohlkörpers als Kompensator und Luftfeder liegt der Festigkeitsträger insbesondere in Form eines Kordgewebes vor.

Zur Erzielung einer ausreichenden Haftung zwischen Festigkeitsträger und Elastomer kann das erfindungsgemäß eingesetzte Aramid gummifreundlich präpariert sein.

Die Außenschicht des Hohlkörpers besteht insbesondere aus einem auf die entsprechenden Außenanforderungen abgestimmten Elastomer, insbesondere aus Ethylen-Propylen-Dien-Mischpolymerisat (EPDM).

Die Innenschicht des Hohlkörpers besteht insbesondere aus Ethylen-Propylen-Dien-Mischpolymerisat (EPDM), Fluorkautschuk (FKM), chlorsulfoniertem Polyethylen (CSM), Polyepichlorhydrinkautschuk (ECO), Silikonkautschuk, hydriertem Nitrilkautschuk (H-NBR), Butylkautschuk (IIR), Naturkautschuk (NR), Styrol-Butadien-Kautschuk (SBR), Nitrilkautschuk (NBR), Polychloropren (CR) oder Verschnitten dieser Kautschuktypen.

Gegebenenfalls vorhandene Zwischenschichten aus elastomerem Werkstoff richten sich nach dem verwendeten Material der Innen- und Außenschicht.

Die einzelnen Schichten, nämlich Außen-, Innen- und Festigkeitsträgerschicht sowie gegebenenfalls vorhandene Zwischenschichten sind vorzugsweise haftend miteinander verbunden.

Ferner kann der Hohlkörper, insbesondere in Verbindung mit der Verwendung als Dampfschlauch geprickt sein.

Bei Kompensatoren sollen hinsichtlich Druckbereich und Nennweiten folgende Werte zugrundeliegen:

| | |
|---|---|
| Druckbereich | PN 6 bis 16 |
| Nennweiten | ND 20 bis 2000 |

Bei Schläuchen kann für besondere Anwendungsfälle auch eine zusätzliche Stahldrahtwendel (Spirale) eingearbeitet werden.

Unter Bezugnahme auf ein Diagramm wird nun die Erfindung experimentell näher erläutert. Es bedeuten:

| | |
|---|---|
| Ordinate | Restbruchkraft in % |
| Abszisse | Behandlungszeit in h |
| Kurve (1) | erfindungsgemäß eingesetztes Aramid |
| Kurve (2) | herkömmliches Para-Aramid |
| Kurve (3) | Polyamid |

### Experimentelle Beschreibung

Die Fäden (erfindungsgemäß eingesetztes Aramid, herkömmliches Para-Aramid und Polyamid) werden jeweils unter leichter Spannung mit einer freien Länge von etwa 1000 mm auf einen Rahmen aufgespannt, wobei diese gegen direkten Dampf (Temperatur: 164°C) durch einen dünnen Baumwolltrikotschlauch geschützt sind, u.z. unter klimatisierter Prüfung. Gemessen wird dabei die Dampfbeständigkeit nach Behandlung bei 6 bar, u.z. in Form der Restbruchkraft in % in Abhängigkeit der Behandlungszeit in h, wobei der unbehandelten Probe eine Restbruchkraft von 100 % (Bezugswert) zukommt.

Das Diagramm zeigt dabei deutlich auf daß bei Einsatz des Aramids mit der in Anspruch 1 definierten Spezifikation selbst nach einer Behandlungszeit von 120 h eine geringe Änderung der Restbruchkraft auftritt, im Gegensatz bei der Verwendung von herkömmlichem Para-Aramid und Polyamid.

Das erfindungsgemäß eingesetzte Aramid unterscheidet sich von dem herkömmlichen Para-Aramid (Basis-Polymer ist Para-Phenylendiaminterephtalamid; Kurzform PPTA) durch dessen Polymerstruktur (Firma Hoechst) und das Spinnverfahren, das nur das N-Methyl-Pyrolidon (Kurzform NMP) als Lösungsmittel benötigt. Die Polymersysteme verbleiben dabei bis zur Verspinnung der isitopen Lösung in NMP gelöst, fällen also nicht aus.

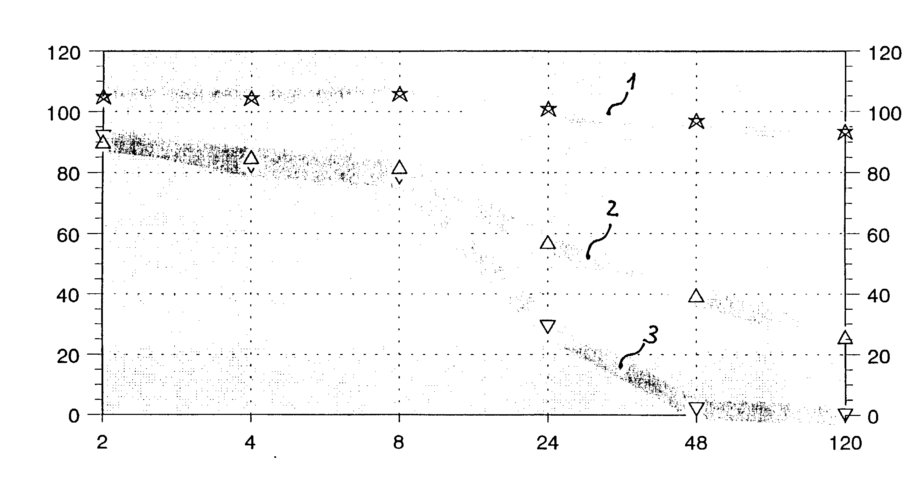

## Patentansprüche

1. Schlauchförmiger Hohlkörper, bestehend aus
- einer Innen- und Außenschicht aus elastomerem Werkstoff,
- einem eingebetteten ein- oder mehrlagigen Festigkeitsträger aus Aramid sowie
- gegebenenfalls aus einer oder mehreren zusätzlichen Zwischenschicht/en aus elastomerem Werkstoff,
dadurch gekennzeichnet, daß das Aramid
- hydrolysebeständig ist,
- als Einfachgarn, Zwirn oder Kord mit höherer Drehung ausgebildet ist, wobei der α-Wert 45 bis 100, insbesondere 55 bis 90, beträgt; sowie
- einen Einlagenwinkel von 54,7 bis 90 Grad, insbesondere 60 Grad, bei Betriebsdruck aufweist.

## Claims

1. A hollow body in the form of a hose, consisting of
- respective inner and outer layers of elastomeric material,
- an embedded single-layer or multilayer strength-carrier of aramide, as well if necessary as
- of one or more additional interlayers of elastomeric material;
characterized in that the aramide
- is hydrolysis-resistant,
- is made as a single yarn, a yarn or a cord with higher twisting, the α-value amounting to 45 to 100, especially 55 to 90; and also
- exhibits at operating pressure an inlay angle of from 54.7 to 90 degrees, especially 60 degrees.

## Revendications

1. Corps creux en forme de tuyau, constitué
- d'une couche intérieure et d'une couche extérieure réalisées en une matière élastomère,
- d'une armature noyée en aramide, en une ou plusieurs épaisseurs, ainsi que
- le cas échéant, d'une ou de plusieurs couche(s) intercalaire(s) additionnelle(s) en une matière élastomère,
caractérisé en ce que l'aramide
- est résistante à l'hydrolyse,
- se présente sous la forme d'un fil simple, d'un fil retors ou d'une corde à torsion relativement forte, la valeur α étant alors de 45 à 100, en particulier de 55 à 90, et
- présente un angle d'enroulement de 54,7 à 90 degrés, en particulier de 60 degrés, à la pression de service
